# EUROPÄISCHE PATENTSCHRIFT

(11) **EP 0 559 938 B1**
(45) Veröffentlichungstag und Bekanntmachung des Hinweises auf die Patenterteilung: **27.10.1993**
(21) Anmeldenummer: 92104187.7
(22) Anmeldetag: 11.03.1992
(51) Int. Cl.: G01F 1/66

(54) **Durchflussmesseinrichtung für flüssige Medien nach dem Ultraschall-Laufzeitprinzip**
Ultrasonic through put measuring device for liquids
Débitmètre à ultrasons pour des liquides

(43) Veröffentlichungstag der Anmeldung: 15.09.1993
(73) Patentinhaber: SIEMENS AKTIENGESELLSCHAFT, 80333 München (DE)
(72) Erfinder: Greppmeier, Paul, W-8500 Nürnberg 50 (DE)

(56) Entgegenhaltungen:
- EP-A- 0 392 294
- CH-A- 669 463

## Beschreibung

Die Erfindung betrifft eine Durchflußmeßeinrichtung für flüssige Medien nach dem Ultraschall-Laufzeitprinzip zum zweiseitigen Rohranschluß im Durchflußverfahren mit einem Mantelrohr, welches ein vom zu messenden, flüssigen Medium durchströmtes Meßrohr umschließt und welches in Strömungsrichtung versetzt angeordnete Durchbrüche für die Aufnahme von als kombinierte Sende-Empfangs-Wandler arbeitende Ultraschall-Wandler besitzt, wobei das Meßrohr Ausnehmungen für den Durchtritt der von den Ultraschall-Wandlern erzeugten Strahlenbündel aufweist, wobei das Meßrohr zum Zu- und Ablauf des strömenden Mediums von den Ausnehmungen zu den Enden des Meßrohrs hins erweiterte Strömungsbereiche aufweist und wobei das Mantelrohr an seinem einen Ende mit einem Außengewinde zum Rohranschluß versehen ist.

Eine solche Durchflußmeßeinrichtung ist aus der EP 0 392 294 bekannt. Diese Durchflußmeßeinrichtung weist ein Mantelrohr auf, welches auf der Einströmseite des flüssigen Mediums mit einem Anschlußstutzen versehen ist. Auf diesem ist ein Außengewinde aufgebracht, auf das eine Überwurfmutter eines Durchflußrohres flüssigkeitsdicht aufschraubbar ist. Die Ausströmseite des Mantelrohres dieser Durchflußmeßeinrichtung ist mit einem Innengewinde versehen, in welches ein Reduzierstück eingeschraubt ist, das mit einem weiteren Anschlußstutzen versehen ist, dessen Außengewinde dem Außengewinde des vorherigen Anschlußstutzens gleich ist und auf das eine Überwurfmutter des Durchflußrohres flüssigkeitsdicht aufschraubbar ist, in das das Medium einfließt.

Das Innere des metallischen Mantelrohres ist so ausgebildet, daß es ein Meßrohr aufnehmen kann. Die Wand des Mantelrohres ist mit Bohrungen für die Aufnahme von Ultraschall-Wandlern versehen, deren Symmetrieachsen in bestimmtem Abstand parallel zur Fließrichtung des Mediums angeordnet sind. Der Außendurchmesser des Meßrohres ist geringfügig kleiner als der Innendurchmesser des Mantelrohres. Der dadurch vorhandene Zwischenraum zwischen den beiden Rohren steht mit dem flüssigen Medium in Verbindung, so daß die Wandung des Meßrohres praktisch druckfrei ist. Das Meßrohr ist mit zwei zu den Bohrungen des Mantelrohres koaxialen Öffnungen für den Durchtritt der von den Ultraschall-Wandlern in Richtung ihrer Symmetrieachse erzeugten Ultraschall-Strahlenbündel in das Innere des Meßrohres versehen. Diesen Öffnungen gegenüber liegen metallische Reflektoren, deren Reflektionsflächen in einem bestimmten Winkel gegen die Flußrichtung einander zugewandt geneigt sind und deren Größe so bemessen ist, daß das auftreffende Ultraschall-Strahlenbündel durch mehrfache Reflektionen an gegenüberliegend, in von den Reflektionswinkeln bestimmten Abständen angeordneten, in die Innenwand des Meßrohres bündig und mit ihren Reflektionsflächen parallel zur Fließrichtung des Mediums eingelassenen Reflektoren vom jeweils sendenden an den empfangenden Ultraschall-Wandler gelangt.

Die beiden Ultraschall-Wandler werden zur Ultraschall-Laufzeitmessung periodisch abwechselnd auf "Sendung bzw. Empfang" geschaltet, wobei im Zustand "Sendung" bzw. "Empfang" des einen Ultraschall-Wandlers sich der andere Ultraschall-Wandler stets im anderen Zustand "Empfang" bzw. "Sendung" befindet. Das ausgesendete Ultraschall-Strahlenbündel gelangt nach mehrfacher Reflektion durch die Reflektoren senkrecht zur Richtung des strömenden Mediums auf den empfangenden Ultraschall-Wandler.

Aus der EP 0 392 294 ist außerdem eine Durchflußmeßeinrichtung bekannt, bei der anstelle der in der gleichen Richtung liegenden Eintritts- und Austrittsöffnung des Mediums diese Öffnungen an der gleichen Stelle als sogenanntes Einrohr-Anschlußelement ausgebildet sind. Solche Einrohr-Anschlußelemente sind im Prinzip aus der Installationstechnik bekannt und bedürfen keiner näheren Erläuterung. Der innere Aufbau bezüglich der Anordnung der Ultraschall-Wandler und des Meßrohres entspricht dem vorangehend beschriebenen Aufbau. Das Mantelrohr besitzt eine zur Austrittsöffnung des Meßrohres koaxiale Eintrittsöffnung, die sich mit Hilfe einer Überwurfmutter an der Rohrarmatur befestigen läßt. Das flüssige Medium tritt zwischen der Außenwand des Meßrohres und der Innenwand des Mantelrohres in die Meßeinrichtung ein, wird am geschlossenen Ende des Mantelrohres nach innen umgelenkt, tritt durch das Meßrohr hindurch und fließt an dessen austrittseitigem Ende in die Armatur zurück.

Die vorangehend beschriebene Durchflußmeßeinrichtung mit einem Einrohr-Anschlußstück läßt sich in besonders kurzer Bauform fertigen und ist daher zum Einsatz anstelle von Flügelradzählern mit einer maximalen Baulänge von 110 mm geeignet. Durch Umlenkung der Fließrichtung bei der Einrohrausführung ergibt sich allerdings ein Druckabfall. Dieser wird bei der oben zuerst genannten Durchflußmeßeinrichtung mit zweiseitigem Rohranschluß im Durchflußverfahren zwar vermieden, doch sind konstruktionsbedingt kurze Bauformen nicht verfügbar. Daher besteht die Aufgabe, eine Durchflußmeßeinrichtung der obengenannten Art zu schaffen, die bei geringem Druckabfall eine kurze Bauform ermöglicht und die sich zugleich leicht montieren läßt. Unter geringem Druckabfall wird hier ein maximaler Druckabfall bis zu 1 bar bei zweifachem Nenndurchfluß verstanden, wobei der Nenndurchfluß für die aufgabengemäße Durchflußmeßeinrichtung z.B. bei einer Baulänge von 110 mm bis zu 1,5 m³ pro Stunde betragen soll. Die Aufgabe wird, ausgehend von der obengenannten Meßeinrichtung, dadurch erreicht, daß das Mantelrohr an seinem anderen Ende ebenfalls mit einem Außengewinde versehen ist, daß die erweiterten Strömungsbereiche des Meßrohres zumindest teilweise die Außengewinde überlappen und daß sich die Außengewinde an die den nächstliegenden Ultraschall-Wandler stirnseitig umgebende Wandung des Mantelrohres direkt anschließen. Eine weitere Reduzierung der Baulänge läßt sich dadurch erreichen, wenn die Wandler in Längsrichtung des Mantelrohres kleine Abmessungen aufweisen. Um den Durchfluß ausreichend genau messen zu können, sind genügend lange Ultraschall-Weglängen erforderlich. Daher ist es von Vorteil, wenn der Abstand der Symmetrieachsen der Ultraschall-Wandler nicht kleiner als 55 mm ist. Wird die Durchflußmeßeinrichtung als Warmezähler verwendet, so wird hierzu ein Temperaturmeßfühler benötigt, der vorteilhafterweise im erweiterten Strömungsbereich vorgesehen ist. Eine weitere vorteilhafte Ausführungsform ist gegeben, wenn die Ultraschall-Wandler auf ihrer elektrischen Anschlußseite jeweils mit einer Kappe versehen sind, durch die über eine Öffnung die elektrische Anschlußleitung geführt ist, deren Isoliermantel von dem Rand der Öffnung dicht umschlossen ist. Etwaige Kriechströme über die elektrische Anschlußleitung durch Befeuchtung, wobei hier ausschließlich an Störfälle gedacht ist, lassen sich hiermit von vornherein vermeiden. Eine besonders einfache und zweckmäßige Weiterbildung der Erfindung ist angegeben, wenn die Wandler zur Überstülpung der Kappe über die Außenfläche des Mantelrohres überstehen. Ist das Meßrohr als Kunststoffteil ausgeführt, in das zur Ultraschall-Lenkung vorgesehene Reflektoren eingespritzt sind, so erhält man hierdurch einen festen Sitz der Reflektoren und kann zudem vorstehende Kanten, die Wirbel bilden und die Strömung damit stören, vermeiden. Von besonderem Vorteil ist es, wenn die Durchflußmeßeinrichtung nicht länger als 110 mm ist, da hiermit der Anschluß an entsprechende Rohrleitungen als Ersatz von z.B. Flügelradzählern möglich ist.

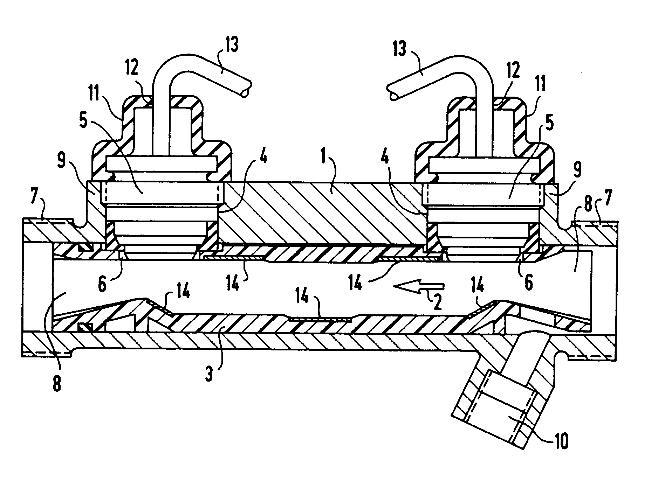

Ein Ausführungsbeispiel der Erfindung wird im folgenden anhand der Zeichnung näher erläutert.

In der Zeichnung ist eine Durchflußmeßeinrichtung für flüssige Medien mit zweiseitigem Rohranschluß im Durchflußverfahren dargestellt, die nach dem Ultraschall-Laufzeitprinzip arbeitet. Sie weist ein Mantelrohr 1 auf, in das ein vom zu messenden flüssigen Medium 2 durchströmtes Meßrohr 3 eingeführt ist. Im Mantelrohr 1 sind in Strömungsrichtung versetzt angeordnete Durchbrüche 4 zur Aufnahme von Ultraschallwandlern 5 vorgesehen, die im Betrieb der Durchflußmeßeinrichtung als kombinierte Sende-Empfangs-Wandler dienen. Das Meßrohr 3 hat den Durchbrüchen 4 des Mantelrohres 1 gegenüberliegende Ausnehmungen 6, durch die das Strahlenbündel der Ultraschall-Wandler 5 hindurchtreten kann. Nach mehrfacher Reflektion an Reflektoren 14, die an der Innenwand des Meßrohres 3 befestigt sind, wird das Strahlenbündel vom jeweils gerade empfangenden Ultraschall-Wandler 5 aufgenommen, wobei das Strahlenbündel jeweils in Richtung der Symmetrieachse der beiden Ultraschall-Wandler 5 aus diesen aus- bzw. eintritt. Demzufolge sind die den Ultraschall-Wandlern 5 gegenüberliegenden Reflektoren 14 um einen bestimmten Winkel geneigt, um das ausgesendete Ultraschall-Strahlenbündel zunächst aus der Symmetrieachse in die Strömungsrichtung abzulenken und aus dieser beim Eintritt in den empfangenden Ultraschall-Wandler 5 wieder in Richtung seiner Symmetrieachse umzulenken. Das Meßrohr 3 hat, ausgehend von den geneigten Reflektoren 14, zu seinen Enden hin aufgeweitete Strömungsbereiche 8.

Die Baulänge der Ultraschall-Durchflußmeßeinrichtung ist durch die Länge des Mantelrohres 1 bestimmt, das an seinen beiden Enden ein Außengewinde 7 zum Anschluß an die Rohrleitung aufweist, wozu jeweils eine Überwurfmutter auf die Außengewinde 7 aufgeschraubt wird. Die Außengewinde 7 schließen direkt an die durch den Durchbruch 4 gebildete Wandung 9 im Mantelrohr 1 an, die den jeweiligen Ultraschall-Wandler 5 umschließt. Durch diese Ausgestaltung ist demzufolge die Baulänge insoweit minimiert, als sie sich allein aus der zum Anschluß an die vorhandene Rohrinstallation unumgänglichen Aufschraublänge und aus der ebenfalls erforderlichen Länge der Ultraschall-Meßstrecke, d.h. dem Abstand der Ultraschall-Wandler 5, zusammensetzt. Hierbei wird von Ultraschall-Wandlern 5 geringer Breite bzw. kleinen Durchmessers ausgegangen.

Um eine ruhige Ein- bzw. Ausströmung des flüssigen Mediums zu erreichen, dienen hierfür im wesentlichen die erwähnten aufgeweiteten Strömungsbereiche 8 des Meßrohrs 3, die nahezu bis an die Enden des Mantelrohres 1 reichen können und zumindest teilweise dessen Außengewinde 7 überlappen.

Mit der beschriebenen Bauform lassen sich Durchflußmeßeinrichtungen der genannten Art von nur 110 mm Baulänge schaffen bei Meßstrecken, d.h. Abständen zwischen den Symmetrieachsen der Ultraschall-Wandler 5, die größer als 55 mm sind. Im Vergleich zu bekannten Durchflußmeßeinrichtungen nach dem Ultraschall-Laufzeitprinzip dieser Baulänge, nämlich den Einrohranschlußeinrichtung, ist der Druckabfall bei der erfindungsgemäßen Durchflußmeßeinrichtung im Durchflußverfahren mit einer Wasserzähler-Normverschraubung gering und läßt bei der Baulänge von 110 mm noch Nenndurchflüsse bis zu 1,5 m³ pro Stunde zu. Zur Variation des Nenndurchflusses ist im Meßrohr 3 ein Meßeinsatz mit entsprechenden Meßkanalquerschnitt vorgesehen.

Die Ultraschall-Wandler 5 sind gemäß der Zeichnung jeweils mit einer Kappe 11 als Schutz gegen eventuelle Befeuchtung der Kontaktverbindung der elektrischen Anschlußleitung 13 am Ultraschall-Wandler in einem Störfall versehen. Die über den Ultraschall-Wandler 5 gestülpte Kappe 11 weist eine Öffnung 12 zur Durchführung der elektrischen Anschlußleitung 13 auf, die mit einer nicht dargestellten Elektronik verbunden ist. Dabei liegt der Rand der Öffnung 12 dicht an dem Isoliermantel der elektrischen Anschlußleitung 13. Um die Kappe 11 auch im eingebauten Zustand des Ultraschall-Wandlers 5 leicht abnehmen und aufsetzen zu können, ragt dieser über die Außenfläche des Mantelrohres 1 über. Außerdem ist der Ultraschall-Wandler 5 an seinem überstehenden Teil mit einer ringförmigen Nut versehen, in die die Kappe 11 den Ultraschall-Wandler 5 dicht umschließend eingreift.

Das Meßrohr 3 ist als Kunststoffteil ausgeführt, in das die Reflektoren 14 eingespritzt sind, was nicht nur einen guten Halt der Reflektoren 14 sicherstellt, sondern auch die Vermeidung von überstehenden, Wirbel bildenden Kanten ermöglicht, die die Strömung und Durchflußmessung stören würden. Außerdem weist die Durchflußmeßeinrichtung einen Temperatur-Meßfühler 10 auf, der im aufgeweiteten Strömungsbereich 8 des Meßrohres 3 in das flüssige Medium 2 hineinragt. Trotz kurzer Baulänge ist somit also auch die Temperaturmessung in der Durchflußmeßeinrichtung integriert.

## Patentansprüche

1. Durchflußmeßeinrichtung für flüssige Medien nach dem Ultraschall-Laufzeitprinzip zum zweiseitigen Rohranschluß im Durchflußverfahren mit einem Mantelrohr (1), welches ein vom zu messenden, flüssigen Medium (2) durchströmtes Meßrohr (3) umschließt und welches in Strömungsrichtung versetzt angeordnete Durchbrüche (4) für die Aufnahme von als kombinierte Sende-Empfangs-Wandler arbeitende Ultraschall-Wandler (5) besitzt, wobei das Meßrohr (3) Ausnehmungen (6) für den Durchtritt der von den Ultraschall-Wandlern (5) erzeugten Strahlenbündel aufweist, wobei das Meßrohr (3) zum Zu- und Ablauf des strömenden Mediums (2) von den Ausnehmungen (6) zu den Enden des Meßrohres (3) hin erweiterte Strömungsbereiche (8) aufweist und wobei das Mantelrohr (1) an seinem einen Ende mit einem Außengewinde (7) zum Rohranschluß versehen ist, **dadurch gekennzeichnet,** daß das Mantelrohr (1) an seinem anderen Ende ebenfalls mit einem Außengewinde versehen ist, daß die erweiterten Strömungsbereiche des Meßrohres (3) zumindest teilweise die Außengewinde (7) überlappen und daß sich die Außengewinde (7) an die den nächstliegenden Ultraschall-Wandler (5) stirnseitig umgebende Wandung (9) des Mantelrohres (1) direkt anschliessen.

2. Durchflußmeßeinrichtung nach Anspruch 1, **dadurch** **gekennzeichnet,** daß die Ultraschall-Wandler (5) in Längsrichtung des Mantelrohres (1) kleine Abmessungen aufweisen.

3. Durchflußmeßeinrichtung nach Anspruch 1 oder 2, **dadurch gekennzeichnet,** daß der Abstand der Symmetrieachsen der Ultraschall-Wandler (5) nicht kleiner als 55 mm ist.

4. Durchflußmeßeinrichtung nach einem der vorangehenden Ansprüche, **dadurch gekennzeichnet,** daß im erweiterten Strömungsbereich (8) ein Temperaturmeßfühler vorgesehen ist.

5. Durchflußmeßeinrichtung nach einem der vorangehenden Ansprüche**,** **dadurch gekennzeichnet,** daß die Ultraschall-Wandler (5) auf ihrer elektrischen Anschlußseite jeweils mit einer Kappe (11) versehen sind, durch die über Öffnung eine elektrische Anschlußleitung (13) geführt ist, deren Isoliermantel von dem Rand der Öffnung (13) dicht umschlossen ist.

6. Durchflußmeßeinrichtung nach einem der vorangehenden Ansprüche, **dadurch gekennzeichnet,** daß die Ultraschall-Wandler (5) zur Überstülpung der Kappe (11) über die Außenfläche des Mantelrohres (1) überstehen.

7. Durchflußmeßeinrichtung nach einem der vorangehenden Ansprüche, **dadurch gekennzeichnet,** daß das Meßrohr (1) als Kunststoffteil ausgeführt ist, in das zur Ultraschall-Lenkung vorgesehene Reflektoren (14) eingespritzt sind.

8. Durchflußmeßeinrichtung nach einem der vorangehenden Ansprüche, **dadurch gekennzeichnet,** daß diese nicht länger als 110 mm lang ist.

## Claims

1. Throughflow measuring device for liquid media in accordance with the ultrasonic transmission time principle for a two-sided pipe connection in a throughflow operation having a tubular jacket (1) which encloses a measuring pipe (3) through which flows a liquid medium (2) to be measured and which has openings (4), arranged to be offset in the flow direction, for receiving ultrasonic transducers (5) operating as combined transmitting-receiving transducers, wherein the measuring pipe (3) has recesses (6) for the passage of beam of rays generated by the ultrasonic transducers (5), wherein the measuring pipe (3) has widened flow regions (8) for the supply and discharge of the flowing medium (2) from the recesses (6) to the ends of the measuring pipe (3) and wherein the tubular jacket (1) is provided at one end with an external thread (7) for pipe connection, characterised in that the tubular jacket (1) is also provided at its other end with an external thread (7), in that the widened flow regions (8) of the measuring pipe (3) overlap the external threads (7) at least partially, and in that the external threads (7) are directly connected to the end face wall (9) of the tubular jacket (1) surrounding the nearest ultrasonic transducer (5).

2. Throughflow measuring device according to claim 1, characterised in that the ultrasonic transducers (5) have small dimensions in the longitudinal direction of the tubular jacket (1).

3. Throughflow measuring device according to claim 1 or 2, characterised in that the spacing of the axes of symmetry of the ultrasonic transducers (5) is not less than 55 mm.

4. Throughflow measuring device according to one of the preceding claims, characterised in that a temperature sensor (10) is provided in the widened flow region (8).

5. Throughflow measuring device according to one of the preceding claims, characterised in that the ultrasonic transducers (5) are each provided on their electrical connection side with a cover (11) through which an electrical terminal lead (13) is guided via an aperture, the insulating casing of which lead is tightly enclosed by the edge of the aperture (13).

6. Throughflow measuring device according to one of the preceding claims, characterised in that the ultrasonic transducers (5) project out of the outer surface of the tubular jacket (1) for slipping over of the cover (11).

7. Throughflow measuring device according to one of the preceding claims, characterised in that the measuring pipe (1) (sic) is constructed as a plastics part into which are injected reflectors (14) for ultrasonic deflection.

8. Throughflow measuring device according to one of the preceding claims, characterised in that it is not longer than 110 mm.

## Revendications

1. Débitmètre pour des milieux liquides, fonctionnant selon le principe du temps de propagation des ultrasons avec raccordement bilatéral de tube dans le procédé de mesure du débit, comportant un tube enveloppe (1), qui entoure un tube de mesure (3) parcouru par le milieu liquide à mesurer (2) et qui possède des passages (4) décalés dans la direction d'écoulement pour loger des transducteurs à ultrasons (5), qui travaillent en tant que transducteurs d'émission-réception combinés, et dans lequel le tube de mesure (3) comporte des évidements (6) pour le passage du faisceau de rayonnement produit par les transducteurs à ultrasons (5), le tube de mesure (3) comportant, pour l'arrivée et la sortie du milieu en écoulement (2), des zones d'écoulement (8) qui sont élargies des évidements (6) aux extrémités du tube de mesure (3) et le tube enveloppe (1) comportant, à l'une de ses extrémités, un filetage extérieur (7) pour le raccordement d'un tube, caractérisé par le fait que le tube enveloppe (1) comporte également, à son autre extrémité, un filetage (7), que les zones élargies d'écoulement (8) du tube de mesure (3) chevauchent au moins le filetage (7) et que le filetage (7) se raccorde directement à la paroi (9) du tube enveloppe (1), qui entoure frontalement le transducteur à ultrasons (5) venant immédiatement ensuite.

2. Debitmètre suivant la revendication 1, caractérisé par le fait que les transducteurs à ultrasons (5) ont des dimensions petites dans la direction longitudinale du tube enveloppe (1).

3. Débitmètre suivant la revendication 1 ou 2, caractérisé par le fait que la distance entre les axes de symétrie des transducteurs à ultrasons (5) n'est pas inférieure à 55 mm.

4. Débitmètre suivant l'une des revendications précédentes, caractérisé par le fait qu'un capteur de mesure de température (10) est prévu dans la zone d'écoulement élargie (8).

5. Débitmètre suivant l'une des revendications précédentes, caractérisé par le fait que les transducteurs à ultrasons (5) comportent, sur leur côté de raccordement électrique, respectivement un capuchon (11), dans lequel pénètre, par l'intermédiaire d'une ouverture, un conducteur de raccordement électrique (13), dont la gaine isolante est entourée étroitement par le bord de l'ouverture (13).

6. Débitmètre suivant l'une des revendications précédentes, caractérisé par le fait que les transducteurs à ultrasons (5) font saillie au-delà de la surface extérieure du tube enveloppe (1), pour l'emmanchement du capuchon (11).

7. Débitmètre suivant l'une des revendications précédentes, caractérisé par le fait que le tube de mesure (1) est réalisé sous la forme d'une pièce en matière plastique, dans laquelle sont formés, par moulage par injection, des réflecteurs (14) servant à dévier les ultrasons.

8. Débitmètre suivant l'une des revendications précédentes, caractérisé par le fait qu'il a une longueur non supérieure à 110 mm.
